# EUROPÄISCHE PATENTSCHRIFT

(11) **EP 2 887 045 B1**
(45) Veröffentlichungstag und Bekanntmachung des Hinweises auf die Patenterteilung: **23.11.2016**
(21) Anmeldenummer: 14186654.1
(22) Anmeldetag: 26.09.2014
(51) Int. Cl.: B66F 7/20, G01M 17/007, B66F 7/28

(54) **Verschränkungsanlage**
Interleaving assembly
Installation d'entrelacement

(30) Priorität: 18.12.2013 DE 202013105771 U
(43) Veröffentlichungstag der Anmeldung: 24.06.2015
(73) Patentinhaber: Balzer, Hans, 87700 Memmingen (DE)
(72) Erfinder: Balzer, Hans, 87700 Memmingen (DE)
(74) Vertreter: Popp, Eugen

(56) Entgegenhaltungen:
- EP-A1- 2 223 883
- EP-A1- 2 316 779
- DE-A1- 4 323 817

## Beschreibung

Die Erfindung betrifft eine Verschränkungsanlage für Fahrzeuge, insbesondere für Bau- und Nutzfahrzeuge. Verschränkungsanlagen der hier angesprochenen Art sind grundsätzlich bekannt, siehe EP 2316779 A1, EP 223883 A1 und DE 4323817 A1. Sie dienen zur Überprüfung der Verkehrstauglichkeit von Fahrzeugen, die sowohl innerhalb als auch außerhalb einer Serie produziert werden. Dabei kann es sich neben herkömmlichen PKW beispielsweise auch um Krananlagen oder sonstige Nutz- und Baufahrzeuge handeln. Auch diese Fahrzeuge müssen für den öffentlichen Verkehr zugelassen werden. Insbesondere muss die Betriebssicherheit solcher Fahrzeuge auch in schwierigem, beispielsweise besonders unebenem Gelände, gewährleistet sein. Bei einer entsprechenden Sicherheitsüberprüfung kann dann festgestellt sein, ob bauliche Änderungen am Fahrgestell und/oder am Aufbau des jeweiligen Fahrzeugs notwendig sind, damit die Betriebssicherheit am Einsatzort der Fahrzeuge gewährleistet ist. Beispielsweise kann sich bei einer entsprechenden Überprüfung herausstellen, dass Schläuche oder Kabel länger ausgebildet sein müssen, um ein Abreißen derselben auf unwegsamem Gelände zu vermeiden. Eine entsprechende Sicherheitsüberprüfung muss auch für verunfallte und wieder instandgesetzte Fahrzeuge durchgeführt werden. Bei der Sicherheitsprüfung werden bei solchen Fahrzeugen ggf. vorhandene Wiederherstellungsmängel erkannt. Verschränkungsanlagen zur Überprüfung von Fahrzeugen weisen in der Regel einbetonierte Hebebühnenzylinder auf, so dass die Bauzeit der Verschränkungsanlage insgesamt aufwändig und lang ist und ihre Wartung einen erheblichen Aufwand fordert und darüber hinaus mit erheblichen Unbequemlichkeiten für das Wartungspersonal verbunden ist.

Aufgabe der vorliegenden Erfindung ist es daher, eine Verschränkungsanlage für Fahrzeuge zu schaffen, die am Ort der Sicherheitsprüfung einfach installierbar ist und folglich nur eine kurze Einbauzeit erfordert, und die darüber hinaus eine unproblematische Wartung ermöglicht.

Zur Lösung der oben genannten Aufgabe wird eine Verschränkungsanlage mit den Merkmalen des Schutzanspruchs 1 vorgeschlagen.

Die Verschränkungsanlage ist für Fahrzeuge, insbesondere für Bau- und Nutzfahrzeuge vorgesehen und umfasst zwei in eine Bodenausnehmung einsetzbare Kassetten aus Stahl oder dergleichen korrosionsbeständigem Material mit zwei Längsseitenwänden, endseitig angeordneten Stirnseitenwänden und einem Boden, wobei zumindest die Längsstirnseitenwände jeweils eine Innenwandung und eine im Abstand dazu angeordnete Außenwandung aufweisen, die einen Hohlraum für die Aufnahme von einem aushärtbaren Füllmaterial begrenzen, und wobei jeder der beiden Kassetten zumindest eine Hebebühnenvorrichtung zugeordnet ist.

Ein wesentlicher Punkt der Erfindung liegt somit darin, dass die Hebebühnenvorrichtungen zur Durchführung der Sicherheitsprüfung von Bau- und Nutzfahrzeugen in zwei Kassetten integriert werden, die am Ort der Sicherheitsprüfung einfach in zwei Bodenausnehmungen eingesetzt werden können. Beide Kassetten werden somit gemeinsam mit den Hebebühnenvorrichtungen herstellerseitig vollständig vorgefertigt und bilden somit so genannte Fertigteilgruben, die vor Ort nur noch in die Bodenausnehmung eingesetzt werden müssen. Die Kassetten, welche die Hebebühnenvorrichtungen umfassen, können dabei von Wartungspersonal besonders einfach über entsprechende Zugänge begangen werden, so dass die Wartung durch das Wartungspersonal bequem durchgeführt werden kann.

Vorteilhafterweise weist eine Hebebühnenvorrichtung jeweils zwei Hebezylinder und eine Aufstandsfläche auf, die zur Lagerung eines Reifens eines zu überprüfenden Fahrzeugs dient. Um eine Verschränkung eines zu überprüfenden Fahrzeugs zu realisieren, sind die Hebezylinder einer Hebebühnenvorrichtung vorzugsweise einzeln ansteuerbar, so dass also die Neigung der Aufstandsfläche je nach Ansteuerzustand der der Aufstandsfläche zugeordneten Hebezylinder variieren kann. Die Hebebühnenvorrichtung ist vorzugsweise an beiden Innenwandungen der Kassette, insbesondere mittels daran befestigter Tragprofile angeordnet. Auf diese Weise kann die Hebebühnenvorrichtung besonders einfach an der Kassette bereits herstellerseitig vormontiert werden und gemeinsam mit der Kassette zum Installationsort transportiert werden. Jedem Hebezylinder ist vorzugsweise eine Antriebseinrichtung zugeordnet. Die Hebezylinder können beispielsweise hydraulisch oder auch elektrisch ausgebildet sein. In der Längsrichtung der Kassette gesehen ist jeweils vorzugsweise ein erster Hebezylinder an einem ersten Ende der Aufstandsfläche und ein zweiter Hebezylinder an einem zweiten Ende der Aufstandsfläche angeordnet. Auf diese Weise kann die Neigung der Aufstandsfläche durch eine unterschiedliche Ansteuerung der am ersten und am zweiten Ende angeordneten Hebezylinder variieren und ein unebenes Gelände simuliert werden.

Die Längsseitenwände der beiden Kassetten sind vorzugsweise bereits herstellerseitig nebeneinander angeordnet und miteinander verschweißt. Mit anderen Worten ausgedrückt bilden die beiden Einzelkassetten eine einzige durch eine Mittelwand getrennte Kassette. Grundsätzlich weist jede Kassette zur Überprüfung von mehreren unterschiedlichen Fahrzeugen vorzugsweise mehrere, insbesondere drei Hebebühnenvorrichtungen auf, die in einer Längsrichtung der Kassette gesehen hintereinander angeordnet sind. Die Aufstandsflächen der mehreren Hebebühnenvorrichtungen einer Kassette können dabei unterschiedlich lang ausgebildet sein, so dass zum einen unterschiedliches Gelände simuliert werden kann und zum anderen unterschiedliche Fahrzeuge auf den Aufstandsflächen gelagert werden können. An jeder Hebebühnenvorrichtung kann, insbesondere an deren Aufstandsfläche, eine Radlaufsicherung vorgesehen sein.

Die Erfindung wird im Folgenden anhand der Zeichnung näher erläutert. Es zeigen:
- Fig. 1: einen schematischen Querschnitt der Verschränkungsanlage gemäß der Erfindung;
- Fig. 2: einen schematischen Längsschnitt der Verschränkungsanlage gemäß der Erfindung, und
- Fig. 3: eine schematische Draufsicht auf eine Verschränkungsanlage gemäß der Erfindung.

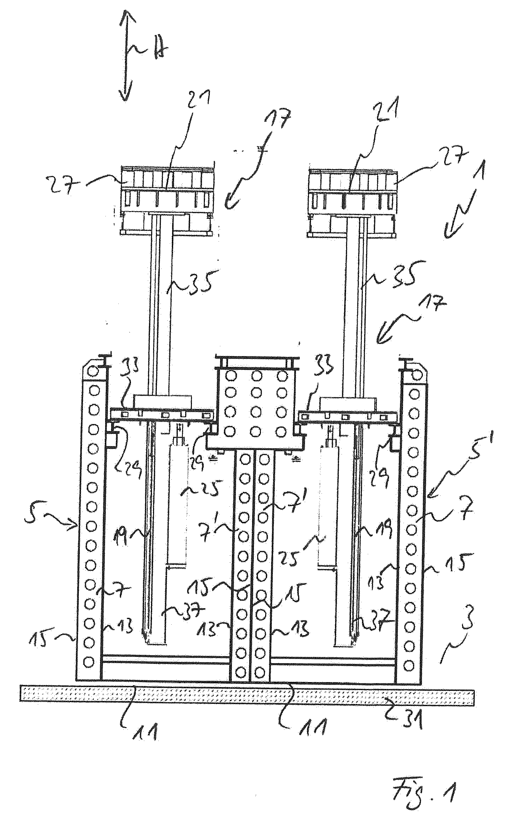

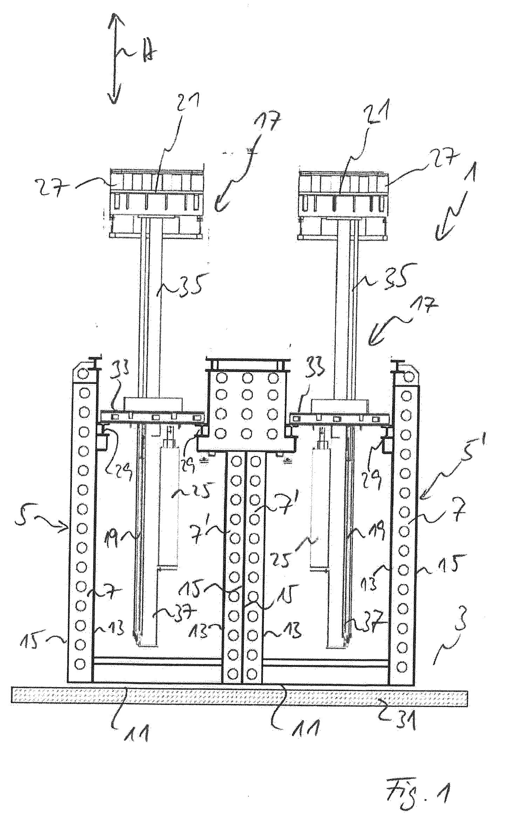

Die Fig. 1 zeigt eine schematische Querschnittansicht einer Verschränkungsanlage 1 gemäß der Erfindung. Die Verschränkungsanlage 1 kann vor Ort in eine Bodenausnehmung 3 eingesetzt werden und weist zwei Kassetten 5 und 5' aus Stahl oder dergleichen korrosionsbeständigem Material auf.

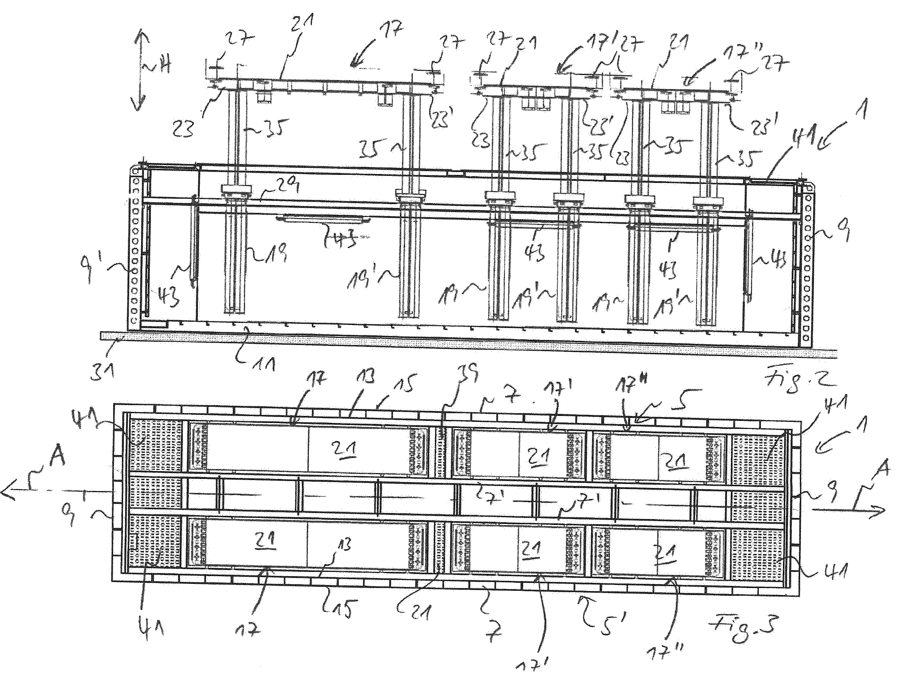

Jede der Kassetten 5, 5' umfasst zwei Längsseitenwände 7, 7', endseitig angeordnete Stirnseitenwände 9, 9' (vgl. Fig. 2) und einen Boden 11. Zumindest die Längsseitenwände 7, 7' weisen jeweils eine Innenwandung 13 und eine im Abstand dazu angeordnete Außenwandung auf, die einen Hohlraum ausbilden. Der Hohlraum dient zur Aufnahme von einem aushärtbaren Füllmaterial, wenn die Verschränkungsanlage 1 in die Bodenausnehmung 3 eingesetzt ist. In der Bodenausnehmung 3 sind die beiden Kassetten 5, 5' der Verschränkungsanlage 1 auf einem Fundament 31 angeordnet.

Jede der beiden Kassetten umfasst mindestens eine Hebebühnenvorrichtung 17, die an den Innenwandungen 13 der Kassetten 5, 5' angeordnet ist und dort auf zwei Tragbalken 29 gelagert ist. Die Fig. 1 macht dabei deutlich, dass an jeder Innenwandung 13 einer Kassette 5, 5' jeweils ein Tragbalken 29 angeordnet ist, auf dem sich die Hebebühnenvorrichtung 17 über eine Abstützplatte 33 abstützen kann. Die Tragbalken 29 erstrecken sich dabei in einer Längsrichtung A der Kassetten 5, 5', die in der Fig. 1 senkrecht zur Zeichenebene verläuft.

Jede Hebebühnenvorrichtung 17 weist zwei Hebezylinder 19, 19' auf, von denen in Fig. 1 lediglich ein Hebezylinder 19 gezeigt ist. Jeder Hebezylinder 19, 19' umfasst eine Kolbenstange 35 und eine Kolbenstangenaufnahme 37, wobei die Kolbenstange 35 in der Kolbenstangenaufnahme 37 beweglich gelagert ist, während die Kolbenstangenaufnahme 37 über die Abstützplatte 33 mit der Kassette 5, 5' verbunden ist. An einem dem Boden 11 der Kassetten 5, 5' abgewandten Ende der Kolbenstange 35 ist eine Aufstandsfläche 21 angeordnet, die in einer Höhenrichtung H durch eine Verlagerung der Kolbenstange 35 verlagert werden kann. Die Aufstandsfläche 21 dient zur Lagerung eines zu prüfenden Fahrzeug-Reifens und kann mit einer Radlaufsicherung 27 versehen sein. Jedem Hebezylinder 19, 19' ist eine Antriebseinrichtung 25 zugeordnet. Insgesamt kann der Hebezylinder 19, 19' beispielsweise hydraulisch oder elektrisch angetrieben werden. Es versteht sich, dass während des Transports der vorgefertigten Verschränkungsanlage 1 die Kolbenstangen 35 vorzugsweise vollständig in die Kolbenstangenaufnahme 37 eingefahren sind.

Die Fig. 2 zeigt ein Ausführungsbeispiel der Verschränkungsanlage gemäß der vorliegenden Erfindung, bei der in einem Längsschnitt der Verschränkungsanlage 1 insgesamt drei Hebebühnenvorrichtungen 17, 17' und 17" vorgesehen sind. Die Figur macht deutlich, dass jeder Hebebühnenvorrichtung 17, 17' und 17" jeweils zwei Hebezylinder 19, 19' zugeordnet sind, ebenso wie eine Aufstandsfläche 21, die mit den beiden Hebezylindern 19, 19' in Verbindung steht. Ein erster Hebezylinder 19 ist dabei einem ersten Ende 23 der Aufstandsfläche 21 zugeordnet, während ein zweiter Hebezylinder 19' einem zweiten, dem ersten Ende 23 gegenüberliegenden Ende 23' zugeordnet ist.

Die Aufstandsflächen 21 der einzelnen Hebebühnenvorrichtungen 17, 17' und 17" können unterschiedlich lang ausgebildet sein. Die in den beiden Kassetten 5, 5' nebeneinander angeordneten Hebebühnenvorrichtungen 17, 17' und 17" sind jedoch vorzugsweise gleichlang ausgebildet, wie insbesondere aus der Fig. 3 gut erkennbar ist. Sofern, wie in Fig. 2 und Fig. 3 gezeigt, mehrere Hebebühnenvorrichtungen 17, 17', 17" in einer Kassette 5, 5' vorgesehen sind, sind diese vorzugsweise hintereinander in der Längsrichtung A der Kassetten 5, 5' angeordnet. Weiterhin können Stege 39 zwischen den Aufstandsflächen 21 zweier Hebebühnenvorrichtungen 17, 17', 17" vorgesehen sein, um Freiräume zwischen den Aufstandsflächen 21 zu vermeiden.

Im Betrieb der Verschränkungsanlage 1 fährt ein zu überprüfendes Fahrzeug entweder mit zwei Rädern auf zwei zugeordnete Aufstandsflächen 21 oder mit allen vier Rädern auf vier zugeordnete Aufstandsflächen 21. Die Gesamtbreite der Kassetten 5 und 5' ist vorzugsweise auf die Spurbreite eines LKW abgestimmt, so dass auch ein großes Fahrzeug durch die Verschränkungsanlage 1 überprüft werden kann. Jeder Hebezylinder 19, 19' jeder Hebebühnenvorrichtung 17, 17', 17" ist einzeln ansteuerbar, so dass die Höhe sämtlicher Kolbenstangen 35 variieren kann. Auf diese Weise ist es möglich, die Neigung der Aufstandsflächen 21 insbesondere auch in schneller Abfolge zu variieren und auf diese Weise eine unebene Geländefahrt des überprüften Fahrzeugs zu simulieren. Eine Verschränkung eines auf der Verschränkungsanlage 1 befindlichen Fahrzeugs wird dadurch erreicht, dass beispielsweise ein in der Kassette 5 angeordneter Hebezylinder 19' eine in der Höhenrichtung H gesehen niedrige Position einnimmt, während der zugeordnete zweite Hebezylinder 19 eine demgegenüber höhere Position einnimmt. Die Aufstandsfläche 21 ist dann entsprechend geneigt gegenüber dem Boden 11 der Kassette angeordnet. Zur gleichen Zeit kann in der benachbarten Kassette 5' der dem zweiten Ende 23' zugeordnete Hebezylinder 19' höher als der dem ersten Ende 23 zugeordnete Hebezylinder 19 angeordnet sein. Die Aufstandsflächen 21 der beiden Hebebühnenvorrichtungen, die in den beiden Kassetten 5, 5' benachbart zueinander angeordnet sind, weisen dann gegenläufige Neigungen auf, wodurch eine "Verschränkung" des auf den Aufstandsflächen 21 befindlichen Fahrzeugs erreicht wird. Eine entsprechende Verschränkung kann auch dann erzielt werden, wenn vier oder mehr Räder eines zu überprüfenden Fahrzeugs auf den Aufstandsflächen 21 der Mehrzahl von Hebebühnenvorrichtungen 17, 17', 17" angeordnet sind.

Die Verschränkungsanlage 1 gemäß der Erfindung kann besonders einfach gewartet werden, indem Zugangsluken 41 vorgesehen sind, deren Abdeckungen entfernt werden können. Durch die Zugangsluken 41 kann Wartungspersonal, insbesondere über entsprechend zugeordnete Treppen in die Kassetten 5, 5' gelangen. Besonders vorteilhaft ist es, wenn die Innenräume der Kassetten 5, 5' nicht voneinander durch die Seitenwände vollständig getrennt, sondern über Öffnungen miteinander verbunden sind, so dass ein Wartungspersonal von einer Kassette 5 in die andere Kassette 5' gehen kann, ohne die Kassetten vorher verlassen zu müssen. Weiterhin können in den Kassetten Beleuchtungseinrichtungen 43 vorgesehen sein, die Wartungsarbeiten erleichtern.

Insgesamt schafft die vorliegende Erfindung eine vorteilhafte Verschränkungsanlage, die flexibel einsetzbar ist und herstellerseitig vollständig montiert und am Benutzungsort einfach in eine geeignete Bodenausnehmung eingesetzt werden kann. Durch die einzelne Ansteuerung der Hebezylinder 19, 19' der mehreren Hebebühnenvorrichtungen 17, 17' und 17" ist es möglich, eine Verschränkung von zu überprüfenden Fahrzeugen zu ermöglichen. Dadurch kann die Betriebssicherheit eines Fahrzeugs auf schwierigem Gelände simuliert werden und ggf. bauliche Änderungen zur Gewährleistung der Betriebssicherheit erkannt werden. Die Anzahl der Hebebühnenvorrichtungen ist grundsätzlich nicht beschränkt. Auch die Breite und Länge der Kassetten ist nicht auf die in den Figuren gezeigte Ausführungsform beschränkt.

Denkbar ist es grundsätzlich auch, mehr als zwei nebeneinander angeordnete Kassetten vorzusehen, um das Spektrum der zu überprüfenden Bau- und Nutzfahrzeuge zu erweitern. Eine entsprechende Erweiterung ist auch in einer Längsrichtung der Kassetten denkbar. Die Breite der Aufstandsflächen 21 und insbesondere auch die Gesamtbreite der Verschränkungsanlage 1 ist auf die Maße der zu überprüfenden Fahrzeuge abgestimmt und kann dementsprechend variieren. Die Ausgestaltung und die technische Realisierung der Hebebühnenvorrichtungen kann ebenfalls variieren. Entscheidend ist, dass die Hebebühnenvorrichtungen die Simulation eines zu überprüfenden Fahrzeugs auch auf schwierigem Gelände ermöglicht und hierzu eine Einzelansteuerung der Hebezylinder 19, 19' ermöglicht.

### Bezugiszeichenliste

- 1: Verschränkungsanlage
- 3: Bodenausnehmung
- 5, 5': Kassette
- 7, 7': Längsseitenwände
- 9, 9': Stirnseitenwände
- 11: Boden
- 13: Innenwandung
- 15: Außenwandung
- 17, 17', 17": Hebebühnenvorrichtung
- 19, 19': Hebezylinder
- 21: Aufstandsfläche
- 23, 23': Erstes und zweites Ende
- 25: Antriebseinrichtung
- 27: Radlaufsicherung
- 29: Tragbalken
- 31: Fundament
- 33: Abstützplatte
- 35: Kolbenstange
- 37: Kolbenstangenaufnahme
- 39: Stege
- 41: Zugangsluken
- 43: Beleuchtungseinrichtung
- A: Längsrichtung
- H: Höhenrichtung

## Patentansprüche

1. Verschränkungsanlage (1) für Fahrzeuge, insbesondere Bau- und Nutzfahrzeuge, umfassend zwei in eine Bodenausnehmung (3) einsetzbare Kassetten (5, 5') aus Stahl oder dergleichen korrosionsbeständigem Material mit zwei Längsseitenwänden (7, 7'), endseitig angeordneten Stirnseitenwänden (9, 9') und einem Boden (11), wobei zumindest die Längsseitenwände (7,7') jeweils eine Innenwandung (13) und eine im Abstand dazu angeordnete Außenwandung (15) aufweisen, die einen Hohlraum für die Aufnahme von einem aushärtbaren Füllmaterial begrenzen, und wobei jeder der beiden Kassetten (5, 5') zumindest eine Hebebühnenvorrichtung (17, 17', 17") zugeordnet ist.

2. Verschränkungsanlage nach Anspruch 1,
**dadurch gekennzeichnet, dass**
eine Hebebühnenvorrichtung (17, 17', 17") jeweils zwei Hebezylinder (19, 19') und eine Aufstandsfläche (21) umfasst.

3. Verschränkungsanlage nach Anspruch 1 oder 2,
**dadurch gekennzeichnet, dass**
jeder Hebezylinder (19, 19') einer Hebebühnenvorrichtung (17, 17', 17") einzeln ansteuerbar ist.

4. Verschränkungsanlage nach einem der vorhergehenden Ansprüche,
**dadurch gekennzeichnet, dass**
die Hebebühnenvorrichtung (17, 17', 17") an beiden Innenwandungen (13) der Kassette (5, 5'), insbesondere mittels daran befestigter Tragprofile (29), angeordnet ist.

5. Verschränkungsanlage nach einem der vorhergehenden Ansprüche,
**dadurch gekennzeichnet, dass**
jedem Hebezylinder (19, 19') eine Antriebseinrichtung (25) zugeordnet ist.

6. Verschränkungsanlage nach einem der vorhergehenden Ansprüche,
**dadurch gekennzeichnet, dass**
die Hebezylinder (19, 19') hydraulisch ausgebildet sind.

7. Verschränkungsanlage nach einem der vorhergehenden Ansprüche,
**dadurch gekennzeichnet, dass**
in einer Längsrichtung (A) der Kassette (5, 5') gesehen jeweils ein erster Hebezylinder (19) an einem ersten Ende (23) der Aufstandsfläche (21) und ein zweiter Hebezylinder (19') an einem zweiten Ende (23') der Aufstandsfläche (21) angeordnet ist.

8. Verschränkungsanlage nach einem der vorhergehenden Ansprüche,
**dadurch gekennzeichnet, dass**
die Längsseitenwände (7, 7') der beiden Kassetten (5, 5') nebeneinander angeordnet und miteinander verschweißt sind.

9. Verschränkungsanlage nach einem der vorhergehenden Ansprüche,
**dadurch gekennzeichnet, dass**
jede Kassette (5, 5') mehrere, insbesondere drei Hebebühnenvorrichtungen (17, 17', 17") aufweist, die in einer Längsrichtung (A) der Kassette (5, 5') gesehen hintereinander angeordnet sind.

10. Verschränkungsanlage nach Anspruch 9,
**dadurch gekennzeichnet, dass**
die Aufstandsflächen (21) der mehreren Hebebühnenvorrichtungen (17, 17', 17") einer Kassette (5, 5') unterschiedlich lang ausgebildet sind.

11. Verschränkungsanlage nach einem der vorhergehenden Ansprüche,
**dadurch gekennzeichnet, dass**
jede Hebebühnenvorrichtungen (17, 17', 17"), insbesondere deren Aufstandsfläche (21), eine Radlaufsicherung (27) aufweist.

## Claims

1. Interleaving assembly (1) for vehicles such as construction and utility vehicles, comprising two cassettes (5, 5') of steel or a similar corrosion-proof material which can be inserted in a floor recess (3) and has two longitudinal side walls (7, 7'), front side walls (9, 9') arranged at the end side, and a floor (11), wherein at least the longitudinal side walls (7, 7') each exhibit an inner wall (13) and an outer wall (15) arranged at a distance thereto, which delimit a hollow space for receiving a curable filling material, and wherein each of the two cassettes (5, 5') has at least one lifting platform device (17, 17', 17") allocated to it.

2. Interleaving assembly according to claim 1,
**characterized in that**
a lifting platform device (17, 17, 17") in each case comprises two lifting cylinders (19, 19') and one contact surface (21).

3. Interleaving assembly according to claim 1 or 2,
**characterized in that**
each lifting cylinder (19, 19') of a lifting platform device (17, 17', 17") is individually controllable.

4. Interleaving assembly according to any one of the preceding claims,
**characterized in that**
the lifting platform device (17, 17', 17") is arranged at both of the inner walls (13) of the cassette (5, 5') in particular by means of supporting profiles (29) that are attached thereto.

5. Interleaving assembly according to any one of the preceding claims,
**characterized in that**
each lifting cylinder (19, 19') has a drive means (25) allocated to it.

6. Interleaving assembly according to any one of the preceding claims,
**characterized in that**
the lifting cylinders (19, 19') are realized to be hydraulic.

7. Interleaving assembly according to any one of the preceding claims,
**characterized in that**,
as seen in a longitudinal direction (A) of the cassette (5, 5'), in each case a first lifting cylinder (19) is disposed at a first end (23) of the contact surface (21), and a second lifting cylinder (19') is disposed at a second end (23') of the contact surface (21).

8. Interleaving assembly according to any one of the preceding claims,
**characterized in that**
the longitudinal side walls (7, 7') of both of the cassettes (5, 5') are disposed side by side and welded together.

9. Interleaving assembly according to any one of the preceding claims,
**characterized in that**
each cassette (5, 5') exhibits a plurality, in particular three lifting platform devices (17, 17', 17") which are arranged one after another as seen in a longitudinal direction (A) of the cassette (5, 5').

10. Interleaving assembly according to claim 9,
**characterized in that**
the contact surfaces (21) of the plurality of lifting platform devices (17, 17', 17") of a cassette (5, 5') are realized to be of different lengths.

11. Interleaving assembly according to any one of the preceding claims,
**characterized in that**
each lifting platform device (17, 17', 17"), in particular the contact surface (21) thereof, exhibits a wheel arch protection (27).

## Revendications

1. Installation d'entrelacement (1) pour véhicules, en particulier véhicules de chantier et utilitaires, comprenant deux cassettes (5, 5') insérables dans un évidement au sol (3), constituées d'acier ou d'un matériau similaire résistant à la corrosion, comprenant deux parois longitudinales (7, 7'), des parois frontales (9, 9') disposées aux extrémités, et un fond (11), sachant qu'au moins les parois longitudinales (7, 7') présentent chacune une paroi intérieure (13) et une paroi extérieure (15) disposée à distance de celle-ci, lesquelles délimitent une cavité pour la réception d'un matériau de remplissage durcissable, et sachant qu'au moins un dispositif à plateforme élévatrice (17, 17', 17") est associée à chacune des deux cassettes (5, 5').

2. Installation d'entrelacement selon la revendication 1,
**caractérisée en ce que**
un dispositif à plateforme élévatrice (17, 17', 17") comprend respectivement deux vérins élévateurs (19, 19') et une surface d'appui (21).

3. Installation d'entrelacement selon la revendication 1 ou 2,
**caractérisée en ce que**
chaque vérin élévateur (19, 19') d'un dispositif à plateforme élévatrice (17, 17', 17") est pilotable individuellement.

4. Installation d'entrelacement selon l'une des revendications précédentes,
**caractérisée en ce que**
le dispositif à plateforme élévatrice (17, 17', 17") est disposé au niveau des deux parois intérieures (13) de la cassette (5, 5'), en particulier au moyen de profilés porteurs (29) qui y sont fixés.

5. Installation d'entrelacement selon l'une des revendications précédentes,
**caractérisée en ce que**
un dispositif d'entraînement (25) est associé à chaque vérin élévateur (19, 19').

6. Installation d'entrelacement selon l'une des revendications précédentes,
**caractérisée en ce que**
les vérins élévateurs (19, 19') sont constitués de façon hydraulique.

7. Installation d'entrelacement selon l'une des revendications précédentes,
**caractérisée en ce que**
en regardant dans une direction longitudinale (A) de la cassette (5, 5'), respectivement un premier vérin élévateur (19) est disposé à une première extrémité (23) de la surface d'appui (21) et un deuxième vérin élévateur (19') est disposé à une deuxième extrémité (23') de la surface d'appui (21).

8. Installation d'entrelacement selon l'une des revendications précédentes,
**caractérisée en ce que**
les parois longitudinales (7, 7') des deux cassettes (5, 5') sont disposées l'une à côté de l'autre et sont soudées l'une à l'autre.

9. Installation d'entrelacement selon l'une des revendications précédentes,
**caractérisée en ce que**
chaque cassette (5, 5') présente plusieurs dispositifs à plateforme élévatrice (17, 17', 17"), en particulier trois, lesquels sont disposés l'un derrière l'autre en regardant dans une direction longitudinale (A) de la cassette (5, 5').

10. Installation d'entrelacement selon la revendication 9,
**caractérisée en ce que**
les surfaces d'appui (21) des plusieurs dispositifs à plateforme élévatrice (17, 17', 17") d'une cassette (5, 5') sont de longueur différente.

11. Installation d'entrelacement selon l'une des revendications précédentes,
**caractérisée en ce que**
chaque dispositif à plateforme élévatrice (17, 17', 17"), en particulier leur surface d'appui (21), présente une protection de passage de roue (27).
